(19) Europäisches Patentamt
European Patent Office
Office européen des brevets

(11) Veröffentlichungsnummer: **0 554 746 A1**

# (12) EUROPÄISCHE PATENTANMELDUNG

(21) Anmeldenummer: **93101071.4**

(22) Anmeldetag: **25.01.93**

(51) Int. Cl.$^5$: **C09B 62/006**, C09B 62/507, D06P 1/38

(30) Priorität: **06.02.92 DE 4203280**

(43) Veröffentlichungstag der Anmeldung: **11.08.93 Patentblatt 93/32**

(84) Benannte Vertragsstaaten: **CH DE FR GB LI**

(71) Anmelder: **BAYER AG**
**W-5090 Leverkusen 1 Bayerwerk(DE)**

(72) Erfinder: **Eizenhöfer, Thomas, Dr.**
**Joh.-Müller-Strasse 3**
**W-5000 Köln 60(DE)**
Erfinder: **Harms, Wolfgang, Dr.**
**Osenauer Strasse 46**
**W-5068 Odenthal(DE)**
Erfinder: **Herd, Karl-Josef, Dr.**
**Am Gartenfeld 66**
**W-5068 Odenthal-Holz(DE)**

## (54) Reaktivfarbstoffe, deren Herstellung und Verwendung.

(57) Die Reaktivfarbstoffe der Formel

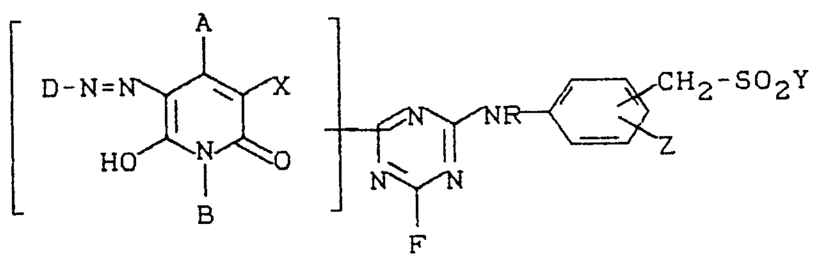

worin die Substituenten die in der Beschreibung angegebene Bedeutung haben, eignen sich insbesondere zum Färben von natürlichen und synthetischen OH- und/oder Amidgruppenhaltigen Materialien.

EP 0 554 746 A1

Die Erfindung betrifft neue Reaktivfarbstoffe. Reaktivfarbstoffe werden in großem Umfange für das Färben und Bedrucken von Textilfasermaterialien eingesetzt. Kombinationen von Reaktivkomponenten sind zwar z.B. aus EP-A 85 025, EP-A 65 732, US-A 4 730 038 und EP-A 307 817 bekannt, jedoch weist der erreichte Stand der Technik noch anwendungstechnische Probleme auf und ist deshalb verbesserungswürdig.

Die vorliegende Erfindung betrifft Reaktivfarbstoffe, die als freie Säure der Formel (I) entsprechen

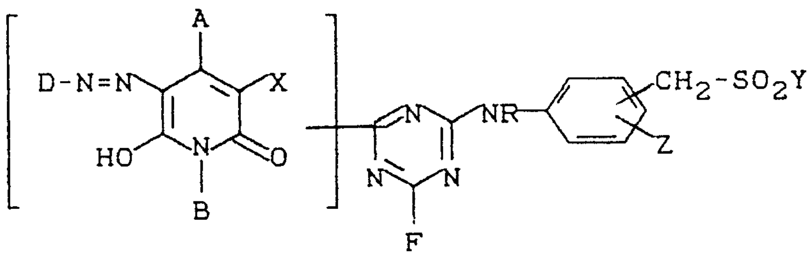

(I)

worin

D = Rest einer Diazokomponente,

A = H, $C_1$-$C_4$-Alkyl, $CO_2H$ oder $CONH_2$,

B = H, $C_1$-$C_6$-Alkyl, mit OH, $SO_3H$, $OSO_3H$, $NH_2$, $CO_2H$, NH($C_1$-$C_4$-Alkyl) oder $C_1$-$C_4$-Alkoxy substituierter $C_1$-$C_6$-Alkylrest, ein cycloaliphatischer $c_3$-$c_6$-Kohlenwasserstoffrest, ein Phenylrest, ein mit $SO_3H$, $CO_2H$, $CH_3$, $OCH_3$, $OC_2H_5$, $NH_2$ oder NH($C_1$-$C_4$-Alkyl) substituierter Phenylrest,

x = H, Cl, Br, $CH_3$, $CH_2SO_3H$, $CH(CH_3)$-$SO_3H$, $CONH_2$, $COCH_3$, $SO_3H$ oder CN,

R = H, $CH_3$, $C_2H_5$, $C_3H_7$, $CH_2CH_2OH$, $CH_2CH_2CO_2H$, $CH_2CO_2H$ oder $CH_2CH_2CN$,

Z = H, $CH_3$, $C_2H_5$, $OCH_3$, $OC_2H_5$ oder $OC_3H_7$ und

Y = $CH=CH_2$, $CH_2CH_2OSO_3H$ oder $CH_2CH_2Cl$.

D steht bevorzugt für einen sulfogruppenhaltigen Rest der Benzol-, Naphthalin- oder Azobenzolreihe und kann zusätzlich durch weitere Substituenten, beispielsweise $SO_3H$, $CO_2H$, $C_1$-$C_4$-Alkyl, $SO_2W$, $CH_2SO_2W$, Halogen, $C_1$-$C_4$-Alkoxy, Acylamino, Ureido, speziell mit einer acylierbaren Aminfunktion, wie Amino, $C_1$-$C_4$-Alkylamino, Amino$C_1$-$C_4$-alkyl, z.B. Aminomethyl beziehungsweise (Methylamino)methyl, oder 2-Aminoethylsulfonyl beziehungsweise 2-(N-Alkylamino)-ethylsulfonyl substituiert sein, wobei W eine der unter Y angegebenen Bedeutungen hat.

Der im folgenden als "T" bezeichnete Rest

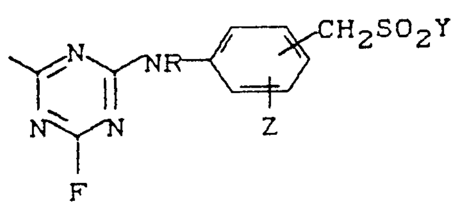

kann sowohl an D als auch an B gebunden sein. Hervorzuheben sind Azopyridonfarbstoffe der Formeln (II) und (III)

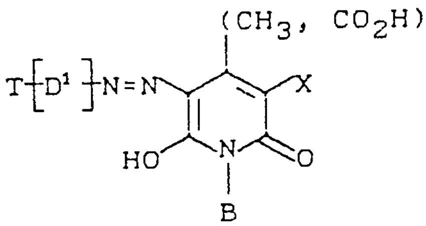

(II)

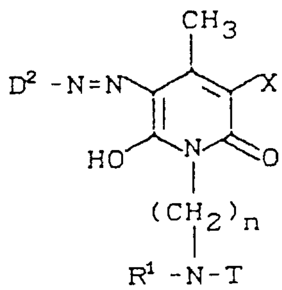

(III)

worin

- B = H, $CH_3$, $C_2H_5$, $C_3H_7$, $C_4H_9$, $CH_2CH_2SO_3H$, $CH_2CH_2OSO_3H$ oder $CH_2CH_2CH_2OCH_3$,
- X = H, $SO_3H$, $CONH_2$ oder $CH_2SO_3H$,
- n = 2, 3 oder 4,
- $R^1$ = H, $C_1$-$C_4$-Alkyl oder $CH_2CH_2OH$ und
- $D^1$ = ein Rest der Formel

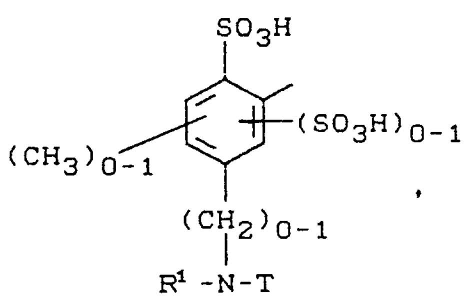

,

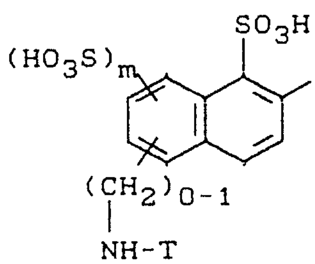

,

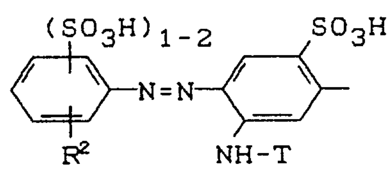

und

- $D^2$ = ein Rest der Formel

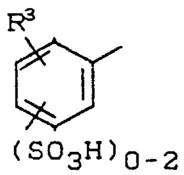 , 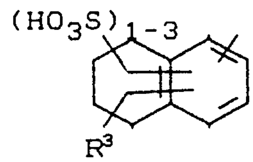 ,

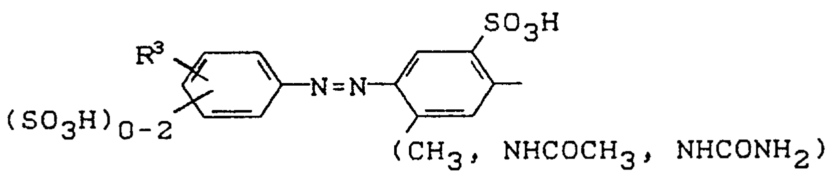

mit

m = 0 oder 1 und

$R^3$ , $R^2$ = H, $CH_3$, $OCH_3$, $OC_2H_5$, $CH_2SO_2W$ oder $SO_2W$

und

T =

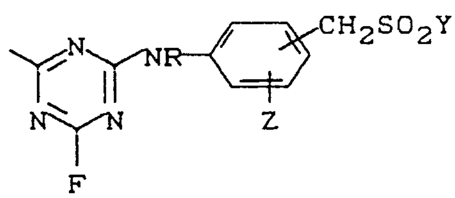

worin Y, Z und W die oben angegebene Bedeutung zukommt.

Besonders bevorzugt sind Monoazoreaktivfarbstoffe der Formel (IV)

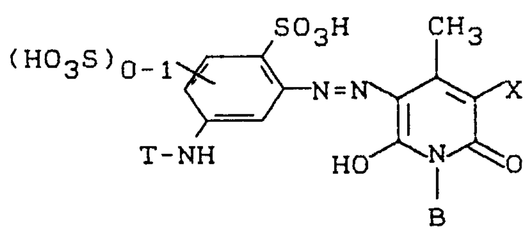 (IV)

worin

B = $CH_3$, $C_2H_5$ oder $CH_2CH_2SO_3H$,

X = H, $CONH_2$ oder $CH_2SO_3H$ und

T die oben genannte Bedeutung zukommt.

Besonders hervorzuheben sind Farbstoffe der Formel (V)

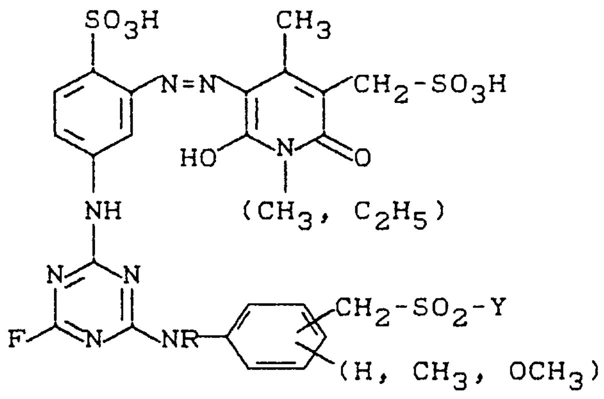

(V)

worin

R = H oder $C_2H_5$ und

Y = $CH=CH_2$, $CH_2CH_2OSO_3H$ oder $CH_2CH_2$-Cl.

In einer bevorzugten Ausführungsform liegen die Farbstoffe als Salze, insbesondere als Alkalisalze vor.

Die Farbstoffe können sowohl als Pulver oder als konzentrierte wässrige Lösungen erhalten und eingesetzt werden.

Die erfindungsgemäßen Azofarbstoffe können in mehreren tautomeren Formen, z.B. auch Hydrazontautomere, existieren. Der Einfachheit halber werden die Farbstoffe nur in einer dieser tautomeren Formen angegeben.

Die Herstellung der Farbstoffe (I) erfolgt, indem man Pyridonfarbstoffe der Formel (VI),

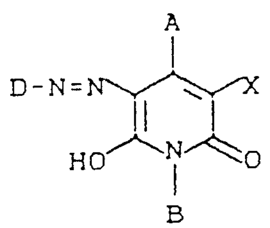

(VI)

worin entweder der Substituent B oder D eine acylierbare Aminogruppe aufweist, mit Trifluor-s-triazin in Gegenwart säurebindender Mittel kondensiert und anschließend das Kondensationsprodukt der Formel (VII)

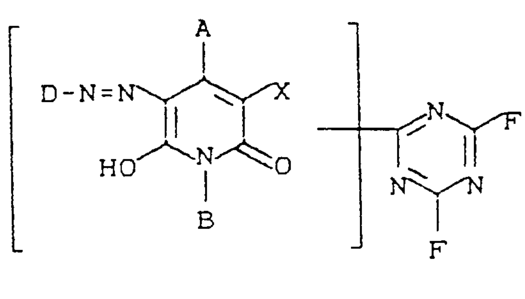

(VII)

mit einer Aminoverbindung der Formel (VIII)

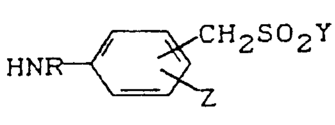

(VIII)

unter neutralen Reaktionsbedingungen umsetzt.

Die Herstellung kann aber auch erfolgen, indem man Trifluor-s-triazin mit einer Aminoverbindung der Formel (VIII) in Gegenwart säurebindender Mittel kondensiert und anschließend die resultierende Difluortriazinverbindung der Formel (IX)

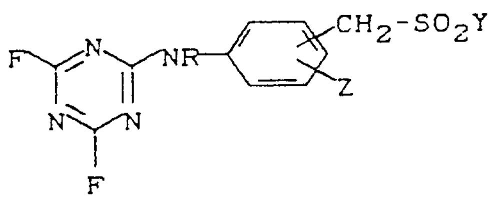

(IX)

mit Farbbasen der Formel (VI) umsetzt.

Die Herstellung von Monoazoreaktivfarbstoffen der Formel (IV) erfolgt entweder durch zweifache Kondensation von Aminoazofarbstoffen der Formel (X)

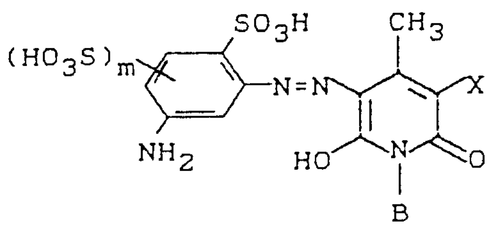

(X)

mit Trifluor-s-triazin und einer Aminoverbindung (VIII), wie oben beschrieben, oder aber durch Diazotieren von Verbindungen der Formel (XI)

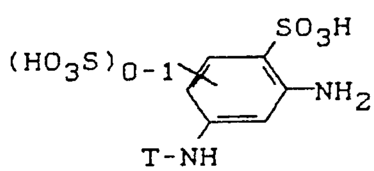

(XI)

und Kuppeln der Diazoniumverbindungen auf Pyridone der Formel (XII) beziehungsweise (XIII), wie es z.B. in der DE-A 2 162 612 beschrieben ist.

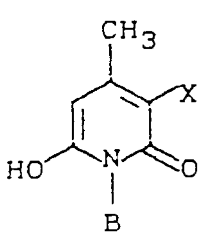

(XII)

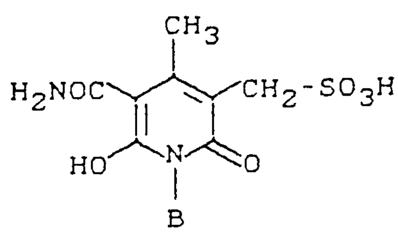

(XIII)

Verbindungen (IX) sind z.B. durch zweifache Kondensation von 2,4-Diaminobenzolsulfonsäure beziehungsweise 2,4-Diamino-1,5-benzoldisulfonsäure mit Trifluor-s-triazin und einer Aminoverbindung (VIII) oder aber auch durch einfache Kondensation der Aminobenzolsulfonsäuren mit der Difluortriazinverbindung (IX)

zugänglich.

Geeignete Amine der Formel (VIII) sind beispielsweise:

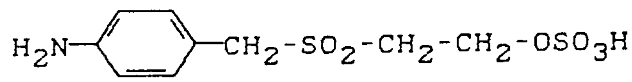

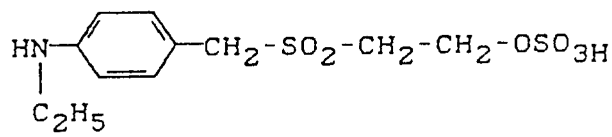

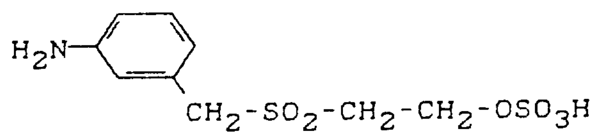

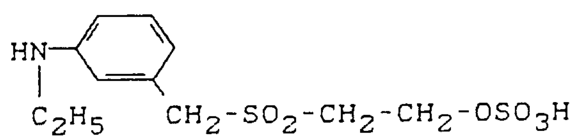

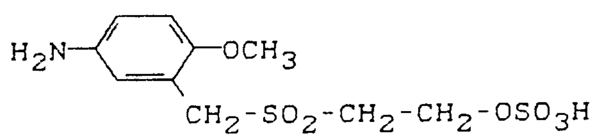

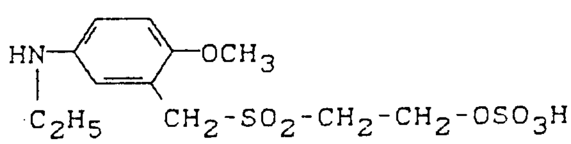

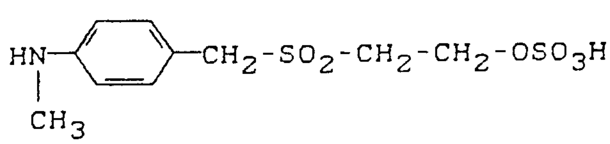

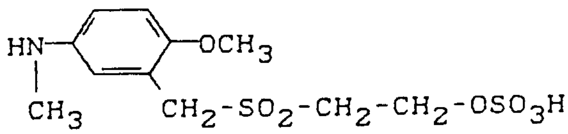

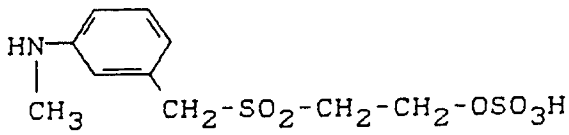

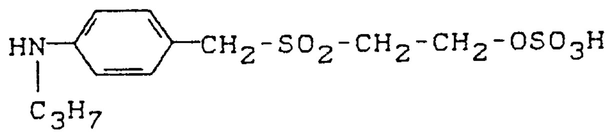

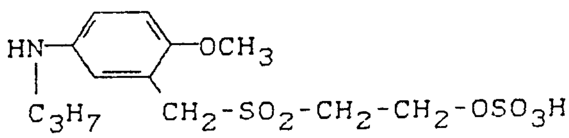

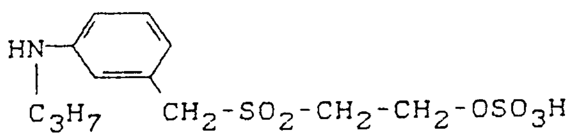

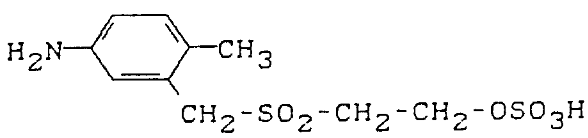

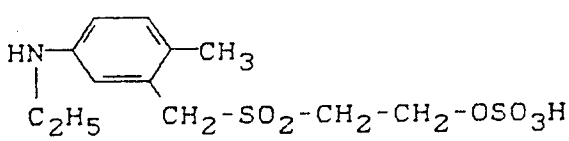

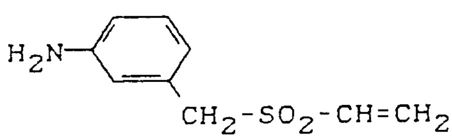

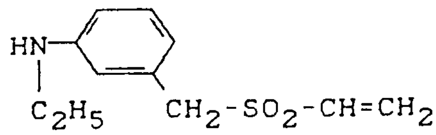

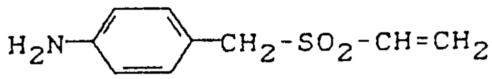

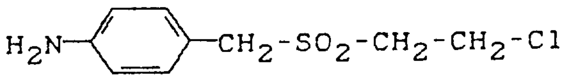

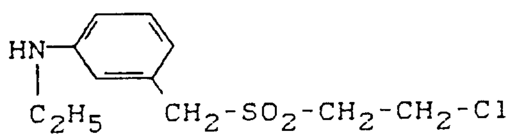

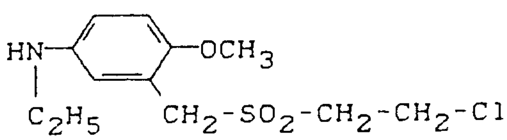

Die erfindungsgemäßen Farbstoffe eignen sich hervorragend zum Färben und Bedrucken von natürlichen und synthetischen OH- und/oder amidgruppenhaltigen Materialien, insbesondere solchen aus Cellulose und Polyamiden. Sie sind besonders geeignet zum Färben von Cellulosematerialien in Auszieh- und Klotzverweilverfahren sowie zum Bedrucken von Cellulosematerialien wie Baumwolle oder Zellwolle.

Die Farbstoffe können in Abmischung mit anderen Farbstoffen für eine Trichromie verwendet werden.

Man erhält bei gutem Aufbauvermögen und hohen Fixierausbeuten Färbungen mit guten Allgemeinechtheiten, insbesondere Naßechtheiten.

Beispiel 1

70,0 g der Monoazofarbbase der Struktur

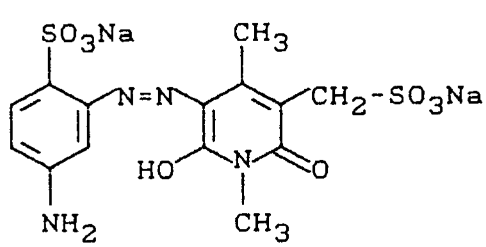

werden in 300 ml Wasser angerührt, durch Eiszugabe auf 0 °C abgekühlt und mit 22 g Cyanurfluorid versetzt. Durch Zudosieren einer 20%igen Sodalösung hält man den pH-Wert zwischen 4,5 - 5,5 konstant. Die Kondensation ist innerhalb von 10 Minuten beendet. Zu dieser Lösung dosiert man nun bei 0 °C eine neutrale Lösung von 43 g 4-[(2-Sulfatoethylsulfonyl)methyl]anilin in 200 ml Wasser und hält dabei durch Zugabe von Sodalösung den pH-Wert zwischen 6,0 - 6,5. Anschließend erwärmt man innerhalb von 2 Stunden und pH 6,5 auf 20 °C. Nach Isolierung und Trocknen erhält man 135 g salzhaltiges gelbes Farbstoffpulver, das Baumwolle nach dem für Reaktivfarbstoffe praktizierten Verfahren in brillanten grünsti-

chig gelbem Farbton färbt ($\lambda_{max}$ = 421 nm($H_2O$)). Der Farbstoff besitzt die Struktur

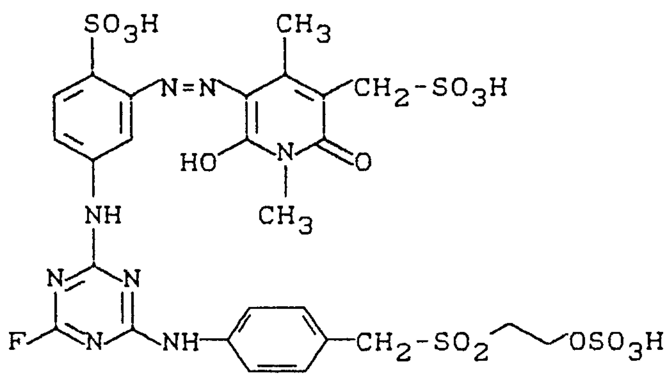

Beispiel 2

27,3 g 2,4-Diaminobenzolsulfonsäure werden in 150 ml Wasser suspendiert und mit verdünnter Natronlauge bei pH 6,5 gelöst. Man fügt 10 g Natriumfluorid als Puffersubstanz zu und kühlt mit Eis auf 0 °C ab. 22 g Cyanurfluorid werden zügig zugesetzt und der pH-Wert anschließend mit 20%iger Sodalösung konstant bei 4,5 -5,0 gehalten. Nach einer Reaktionszeit von 15 Minuten bei pH 4,5 - 5,0 gibt man bei 0 °C eine neutrale Lösung von 43 g 4-[(2-Sulfatoethylsulfonyl)methyl]anilin in 200 ml Wasser zu und kontrolliert den pH-Wert mit Sodalösung bei 6,0 - 6,5. Es wird langsam auf 20 °C erwärmt, wobei der pH-Wert weiterhin bei 6,0 - 6,5 gehalten wird, Nach ca. 2 Stunden ist die Zweitkondensation beendet.

Zur Acylierungsmischung gibt man 200 g Eis und stellt bei 0 - 5 °C mit verdünnter Salzsäure auf pH 2,2. Innerhalb von 15 Minuten tropft man nun 35 ml einer Natriumnitritlösung (300 g/l) zu bei einer Reaktionstemperatur unterhalb von 5 °C. Der pH-Wert sollte 2,2 - 2,5 betragen. Die Diazotierung ist nach 30 Minuten beendet. Der Überschuß an Nitrit wird mit Amidosulfonsäurelösung entfernt.

41,2 g 1,4-Dimethyl-3-aminocarbonyl-5-sulfomethyl-6-hydroxy-2-pyridon-Natriumsalz werden in 250 ml Wasser bei pH 7 gelöst und diese Lösung zur obigen Diazoniumsalzlösung zudosiert. Durch Zutropfen von Sodalösung stellt man den pH-Wert auf 6,5 - 7,0 und hält ihn bei diesem Wert konstant. Es resultiert nach 30 Minuten eine gelbe Lösung. Der Farbstoff erweist sich mit dem in Beispiel 1 beschriebenen Farbstoff als identisch.

Variiert man in Beispiel 1 beziehungsweise 2 die Pyridonkupplungskomponente oder die Aminobenzylsulfonylverbindung, so gelangt man zu weiteren wertvollen grünstichig gelben Farbstoffen, wie sie z.B. in Tabelle 1 wiedergegeben sind.

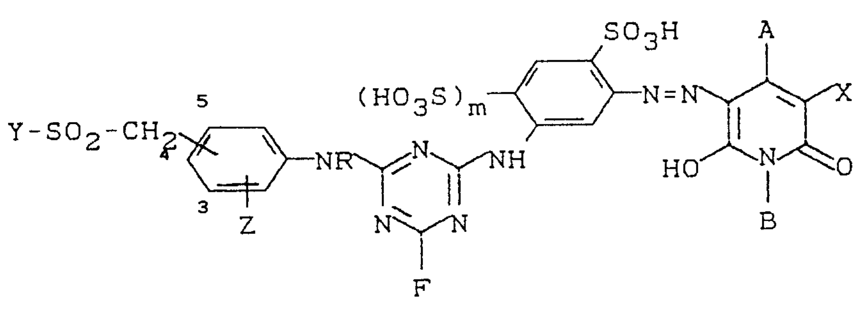

Die Tabellenbeispiele werden durch folgende $\lambda_{max}$-Werte ($H_2O$) charakterisiert:

| Beispiel | nm |
|---|---|
| 3 | 422 |
| 4 | 422 |
| 5 | 423 |
| 6 | 423 |
| 7 | 422 |
| 8 | 420 |

Farbstoffmischungen, z.B. eine Mischung aus Beispiel 1 und 3, sind erhältlich, indem man in Beispiel 1 anstelle von 4-[(2-Sulfatoethylsulfonyl)methyl]anilin eine Mischung der beiden Isomeren, nämlich 3- und 4-[-(Sulfatoethylsulfonyl)methyl]anilin einsetzt.

Tabelle 1:

| Bsp. | A | B | X | m | Z | R | $-CH_2-SO_2-Y$ |
|---|---|---|---|---|---|---|---|
| 3 | $CH_3$ | $CH_3$ | $CH_2SO_3H$ | 0 | H | H | $3-CH_2-SO_2-C_2H_4-OSO_3H$ |
| 4 | $CH_3$ | $C_2H_5$ | " | 0 | H | H | $4-CH_2-SO_2-C_2H_4-OSO_3H$ |
| 5 | $CH_3$ | $CH_3$ | " | 0 | $4-CH_3$ | H | $3-CH_2-SO_2-C_2H_4-OSO_3H$ |
| 6 | $CH_3$ | $C_2H_5$ | " | 0 | $4-OCH_3$ | $C_2H_5$ | " |
| 7 | $CH_3$ | $CH_3$ | " | 0 | H | $C_2H_5$ | " |
| 8 | $CH_3$ | $CH_3$ | " | 0 | H | $C_2H_5$ | $4-CH_2-SO_2-C_2H_4-OSO_3H$ |
| 9 | $CO_2H$ | H | H | 0 | H | H | " |
| 10 | $CO_2H$ | H | $CH_2SO_3H$ | 0 | H | H | $3-CH_2-SO_2-C_2H_4-OSO_3H$ |
| 11 | $CH_3$ | $CH_3$ | $SO_3H$ | 0 | $4-CH_3$ | H | " |
| 12 | $CH_3$ | $CH_3$ | $SO_3H$ | 0 | H | $C_2H_5$ | $4-CH_2-SO_2-C_2H_4-OSO_3H$ |
| 13 | $CH_3$ | $CH_2CH_2SO_3H$ | H | 0 | H | H | " |
| 14 | $CH_3$ | $C_2H_5$ | H | 1 | H | H | " |
| 15 | $CH_3$ | $C_2H_5$ | $CONH_2$ | 1 | H | $C_2H_5$ | " |
| 16 | $CH_3$ | $CH_2CH_2SO_3H$ | " | 0 | H | H | $3-CH_2-SO_2-C_2H_4-OSO_3H$ |
| 17 | $CO_2H$ | H | H | 1 | H | H | " |

Beispiel 18

36,5 g 5-Aminomethyl-2-amino-1-naphthalinsulfonsäure werden in 300 ml Wasser, 100 g Eis und 80 ml 25%iger Salzsäure angerührt und mit 35 ml einer 30%igen Natriumnitritlösung diazotiert. Die resultierende Lösung des Diazoniumsalzes wird nach Entfernen des Nitritüberschusses zu einer Lösung von 41,2 g 1,4-Dimethyl-3-aminocarbonyl-5-sulfomethyl-6-hydroxy-2-pyridon (Na-Salz) in 250 ml Wasser zudosiert. Dabei hält man den pH-Wert konstant zwischen 6,5 bis 7,5. Die Kupplungsreaktion ist nach 30 Minuten beendet.

Anschließend kühlt man mit Eis auf 0 ° C ab und kondensiert, wie in Beispiel 1 beschrieben, mit 22 g Cyanurfluorid und nachfolgend mit 43 g 3-[(2-Sulfatoethylsulfonyl)methyl]anilin. Die Farbstoffisolierung erfolgt nach Aussalzen mit Kaliumchlorid durch Absaugen und Trocknen. Das gelbe Farbstoffpulver, dem die Struktur

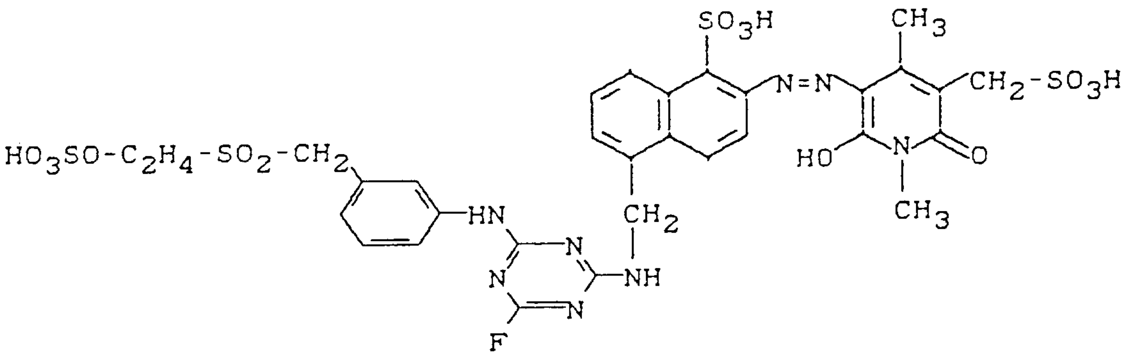

zukommt, liefert auf Baumwolle klare grünstichig gelbe Färbungen ($\lambda_{max}$ = 432 nm ($H_2O$)).

Beispiel 19

Verwendet man in Beispiel 18 anstelle von 5-Aminomethyl-2-amino-1-napthalinsulfonsäure als Diazokomponente nun äquimolare Mengen an 2-Amino-4-(N-methylaminomethyl)benzolsulfonsäure und setzt analog zu Beispiel 18 um, so erhält man einen Farbstoff der Struktur

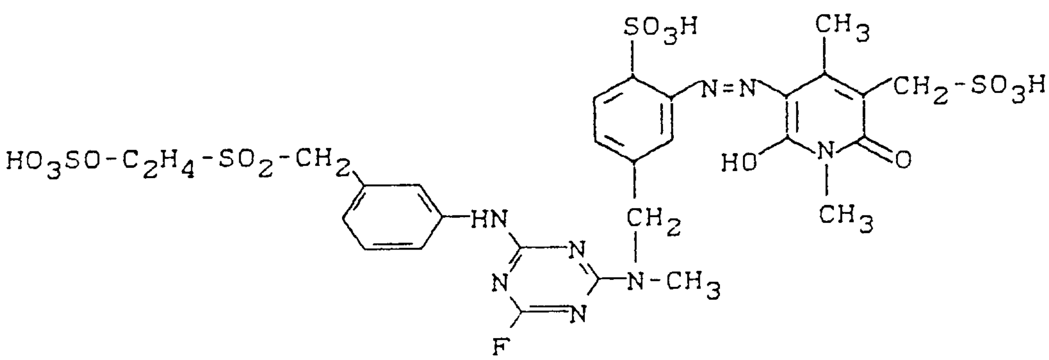

Beispiel 20

Eine Diazoniumsalzmischung, die durch Diazotieren von 25,1 g 3-Aminobenzolsulfonsäure bereitet wurde, wird zu einer neutralen Mischung von 84,2 g des Kondensationsproduktes aus 2,4-Diaminobenzolsulfonsäure (Na-Salz), Cyanurfluorid und 4-[(2-Sulfatoethylsulfonyl)methyl]anilin (vergleiche Beispiel 2) in 250 ml Wasser zudosiert. Der pH-Wert wird dabei durch stetige Zugabe von festem Natriumhydrogencarbonat bei 6,0 bis 6,5 gehalten. Nach sechsstündiger Reaktionszeit wird der Farbstoff der Struktur

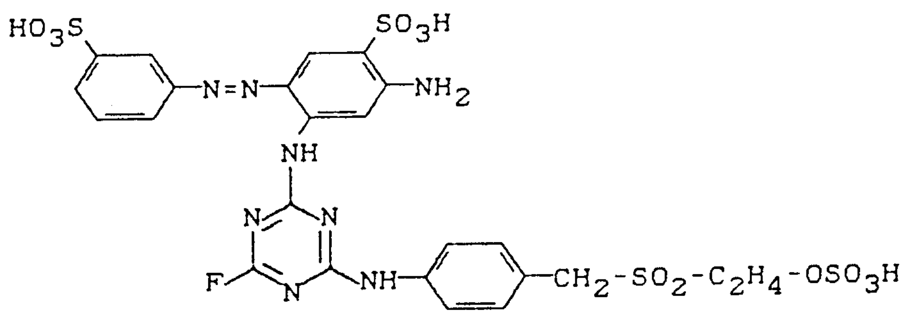

durch Aussalzen mit Kochsalz und Absaugen isoliert. Die feuchte Paste des Zwischenproduktes wird in 200 ml Wasser und 200 g Eis suspendiert und bei 0°C mit Salzsäure auf pH 2,3 bis 2,5 gestellt. Es wird langsam mit 35 ml einer Natriumnitritlösung (300 g/l) diazotiert, wobei sowohl die Temperatur bei 0°C wie auch der pH-Wert bei 2,3 bis 2,5 konstant gehalten wird. Es wird eine Stunde nachgerührt, der Nitritüberschuß entfernt und die Diazotierung innerhalb von 30 Minuten zu einer Lösung von 41,2 g 1,4-Dimethyl-3-aminocarbonyl-5-sulfomethyl-6-hydroxy-2-pyridon (Na-Salz) in 250 ml Wasser gegeben. Durch Zutropfen von Sodalösung hält man den pH-Wert bei 6,5 bis 7,5. Nach Zugabe der Diazotierung rührt man 15 Minuten nach und isoliert den Farbstoff durch Aussalzen (100 g Kaliumchlorid) und Abnutschen. Nach dem Trocknen bei 60°C resultieren 145 g eines salzhaltigen roten Farbstoffpulvers, dem folgende Struktur zukommt:

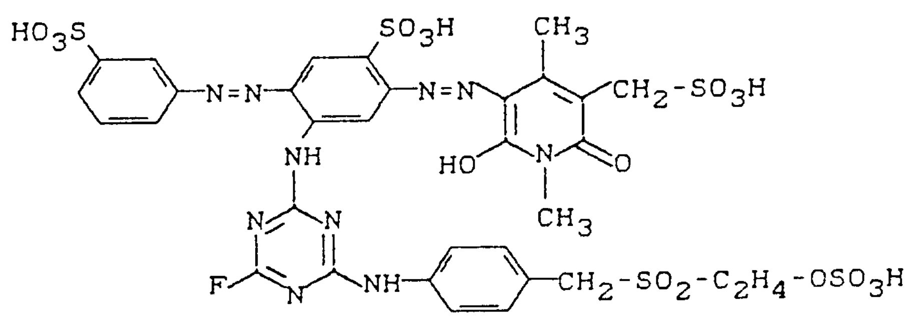

Der neue Diazopyridonfarbstoff färbt Baumwolle in brillanten orangenen Farbtönen ($\lambda_{max}$ = 460 nm ($H_2O$)).

Beispiel 21

28,6 g 1-(2-Aminoethyl)3-aminocarbonyl-4-methyl-6-hydroxy-2-pyridon werden in 250 ml Wasser neutral gelöst und die Lösung auf 0°C abgekühlt. Bei konstantem pH 8,0 fügt man 22 g Cyanurfluorid zu. Der pH-Wert wird durch Zugabe von Sodalösung kontrolliert. Nach 15 Minuten Reaktionszeit fügt man eine neutrale Lösung von 43 g 3-[(2-Sulfatoethylsulfonyl)methyl]anilin in 150 ml Wasser zu und kondensiert im pH-Bereich zwischen 6,5 bis 7,5. Innerhalb von 2 Stunden steigt die Temperatur auf Raumtemperatur an und die Kondensation ist beendet. Anschließend erwärmt man bei pH 7,0 auf 50°C und fügt 55 ml einer neutralen 37%igen Hydroxymethansulfonsäurelösung zu. Es wird bei konstantem pH 7 für eine weitere Stunde bei 50°C erwärmt. Diese Lösung des neuen Zwischenproduktes der Struktur

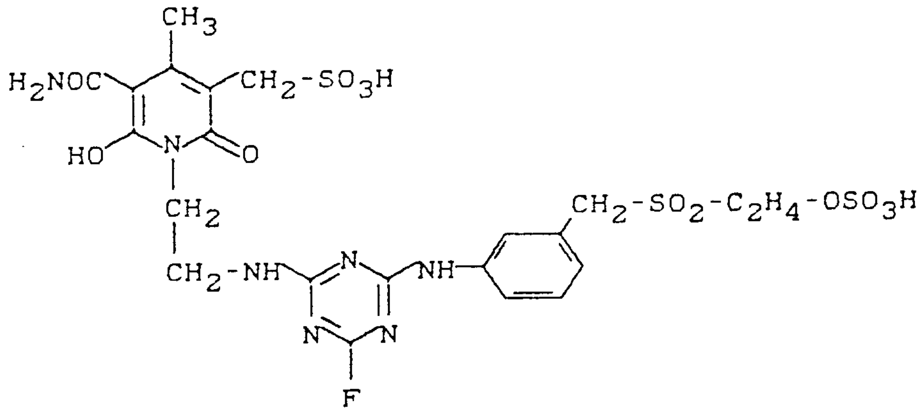

wird auf Raumtemperatur abgekühlt und mit einer Diazoniumsalzmischung, die durch Diazotieren von 47,1 g 2-Amino-1,5-napthalindisulfonsäure-Na-Salz bereitet wurde, umgesetzt. Während der Kupplung hält man den pH-Wert mit Sodalösung konstant bei 6,5 bis 7,5. Nach Reaktionsende salzt man mit Natriumchlorid aus und saugt den ausgefallenen Farbstoff ab. Nach dem Trocknen erhält man ca. 150 g eines gelben Farbstoffpulvers der Struktur

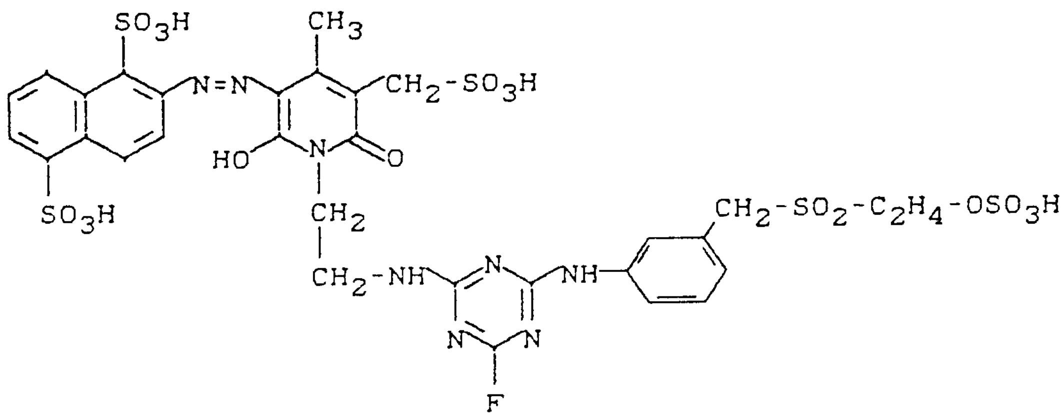

das Baumwolle in klaren gelben Tönen mit hohem Echtheitsniveau färbt ($\lambda_{max}$ = 430 nm ($H_2O$)).

Durch Variation der Diazokomponente sowie der Pyridonsubsitution sind in Analogie zu Beispiel 21 weitere wertvolle Reaktivfarbstoffe zugänglich:

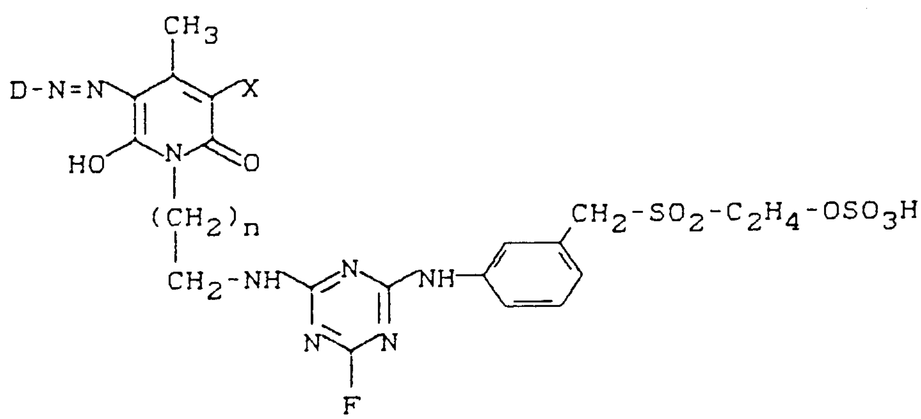

Tabelle 2:

| Beispiel | D | X | n | Farbton |
|---|---|---|---|---|
| 22 | 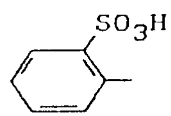 | $CH_2SO_3H$ | 1 | grünstichig gelb (422 nm) |
| 23 | 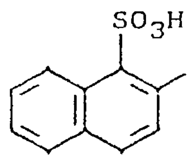 | $CH_2SO_3H$ | 1 | gelb |
| 24 | 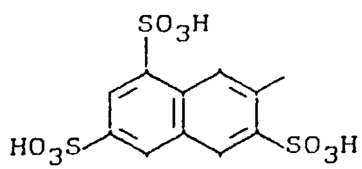 | $CONH_2$ | 1 | gelb |
| 25 | 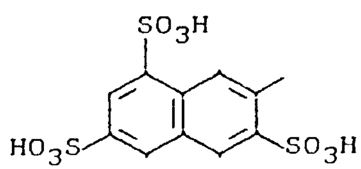 | H | 1 | gelb |

Tabelle 2: Fortsetzung

| Beispiel | D | X | n | Farbton |
|---|---|---|---|---|
| 26 | 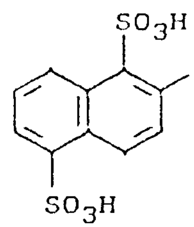 | $CH_2SO_3H$ | 2 | gelb (430 nm) |
| 27 | 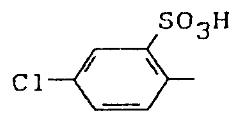 | $CH_2SO_3H$ | 1 | grünstichig gelb |
| 28 | 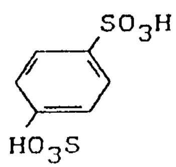 | H | 1 | grünstichig gelb |
| 29 | 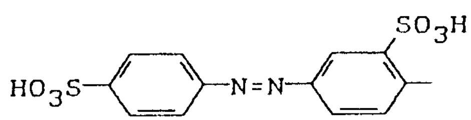 | $CH_2SO_3H$ | 1 | goldgelb (456 nm) |

Tabelle 2: Fortsetzung

| Beispiel | D | X | n | Farbton |
|---|---|---|---|---|
| 30 | 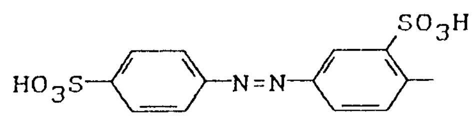 | $CH_2SO_3H$ | 2 | goldgelb (456 nm) |
| 31 | 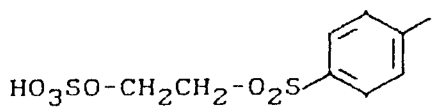 | $CH_2SO_3H$ | 2 | grünstichig gelb |
| 32 | 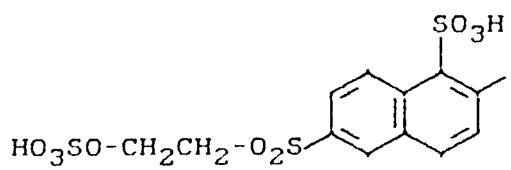 | $CH_2SO_3H$ | 1 | grünstichig gelb |

## Patentansprüche

1. Reaktivfarbstoffe, die als freie Säure der Formel

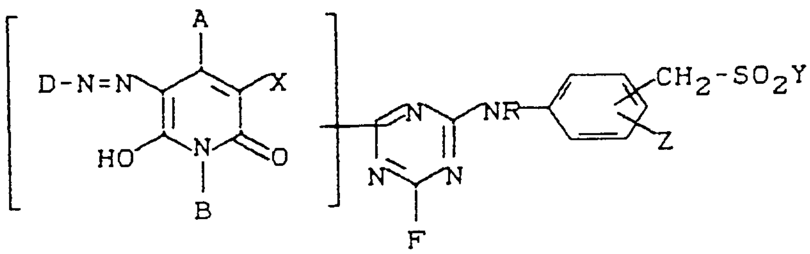

entsprechen, worin

- D = Rest einer Diazokomponente,
- A = H, $C_1$-$C_4$-Alkyl, $CO_2H$ oder $CONH_2$,
- B = H, $C_1$-$C_6$-Alkyl, mit OH, $SO_3H$, $OSO_3H$, $NH_2$, $CO_2H$, NH($C_1$-$C_4$-Alkyl) oder $C_1$-$C_4$-Alkoxy substituierter $C_1$-$C_6$-Alkylrest, ein cycloaliphatischer $C_3$-$C_6$-Kohlenwasserstoffrest, ein Phenylrest, ein mit $SO_3H$, $CO_2H$, $CH_3$, $OCH_3$, $OC_2H_5$, $NH_2$ oder NH($C_1$-$C_4$-Alkyl) substituierter Phenylrest,
- X = H, Cl, Br, $CH_3$, $CH_2SO_3H$, $CH(CH_3)$-$SO_3H$, $CONH_2$, $COCH_3$, $SO_3H$ oder CN,
- R = H, $CH_3$, $C_2H_5$, $C_3H_7$, $CH_2CH_2OH$, $CH_2CH_2CO_2H$, $CH_2CO_2H$ oder $CH_2CH_2CN$,
- Z = H, $CH_3$, $C_2H_5$, $OCH_3$, $OC_2H_5$ oder $OC_3H_7$ und
- Y = $CH=CH_2$, $CH_2CH_2OSO_3H$ oder $CH_2CH_2Cl$.

**2.** Reaktivfarbstoffe nach Anspruch 1, dadurch gekennzeichnet, daß D für einen sulfogruppenhaltigen Rest der Benzol-, Naphthalin-oder Azobenzolreihe steht, der substituiert sein kann mit bei Azofarbstoffen üblichenen Substituenten.

**3.** Reaktivfarbstoffe nach wenigstens einem der vorgehenden Ansprüche, dadurch gekennzeichnet, daß sie wenigstens einer der beiden folgenden Formeln entsprechen

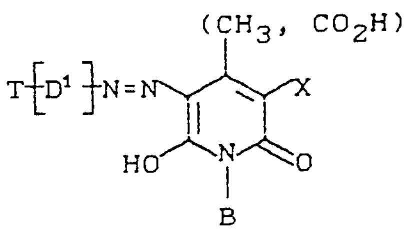

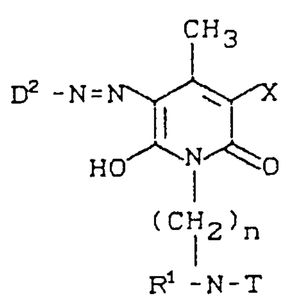

worin

- B = H, $CH_3$, $C_2H_5$, $C_3H_7$, $C_4H_9$, $CH_2CH_2SO_3H$, $CH_2CH_2OSO_3H$ oder $CH_2CH_2CH_2OCH_3$,
- X = H, $SO_3H$, $CONH_2$ oder $CH_2SO_3H$,
- n = 2, 3 oder 4,
- $R^1$ = H, $C_1$-$C_4$-Alkyl oder $CH_2CH_2OH$ und
- $D^1$ = ein Rest der Formel

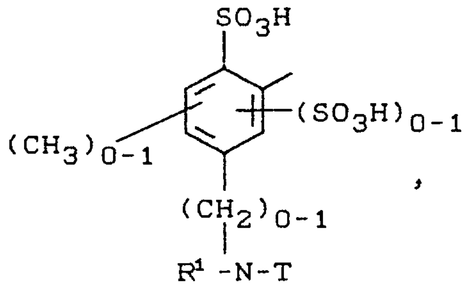 , 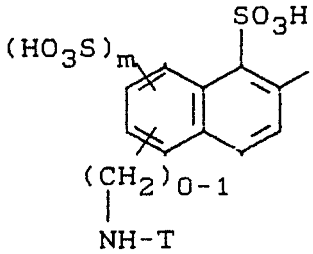 oder

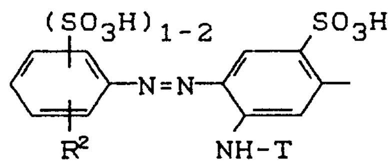

und

$D^2$ = ein Rest der Formel

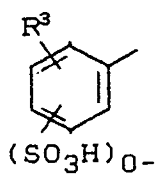 , 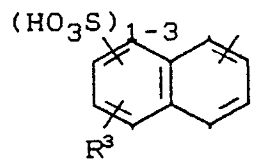 oder

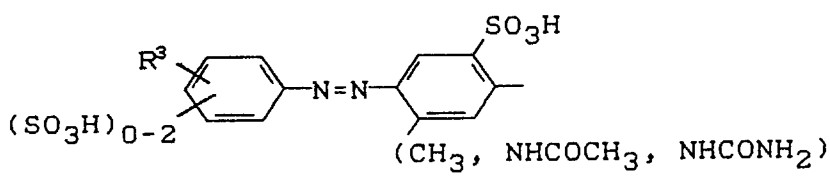

mit

m = 0 oder 1 und

$R^3$ , $R^2$ = H, $CH_3$, $OCH_3$, $OC_2H_5$, $CH_2SO_2W$ oder $SO_2W$

mit

W = $CH=CH_2$, $CH_2CH_2OSO_3H$ oder $CH_2CH_2Cl$

und

T =

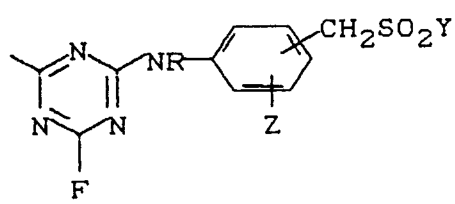

worin Z und Y die Bedeutung wie in Anspruch 1 zukommt.

**4.** Reaktivfarbstoffe nach wenigstens einem der vorgehenden Ansprüche, dadurch gekennzeichnet, daß sie folgender Formel entsprechen

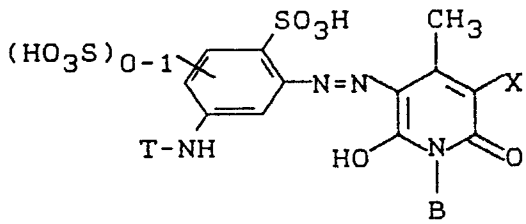

worin
B = $CH_3$, $C_2H_5$ oder $CH_2CH_2SO_3H$,
X = H, $CONH_2$ oder $CH_2SO_3H$ und
worin T die in Anspruch 3 genannte Bedeutung hat.

**5.** Reaktivfarbstoffe nach wenigstens einem der vorhergehenden Ansprüche, dadurch gekennzeichnet, daß sie die folgende Struktur aufweisen:

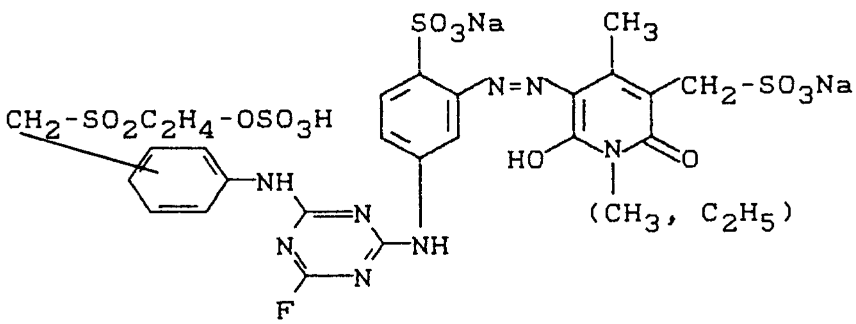

**6.** Verfahren zur Herstellung von Reaktivfarbstoffen nach wenigstens einem der vorhergehenden Ansprüche, dadurch gekennzeichnet, daß man Pyridonfarbstoffe der Formel

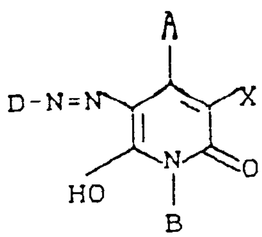

worin entweder der Substituent B oder D eine acylierbare Aminogruppe aufweist, mit Trifluor-s-triazin in Gegenwart säurebindender mittel kondensiert und anschließend das Kondensationsprodukt der Formel

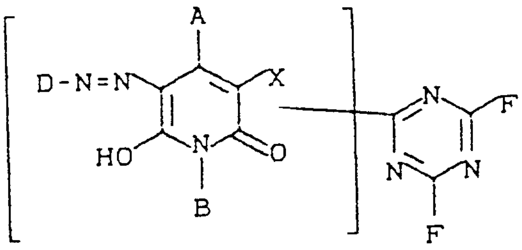

mit einer Aminoverbindung der Formel

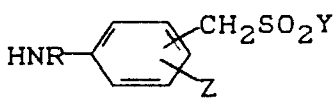

unter neutralen Reaktionsbedingungen umsetzt oder daß man Trifluor-s-triazin mit obiger Aminoverbindung in Gegenwart säurebindender Mittel kondensiert und anschließend die resultierende Difluortriazinverbindung der Formel

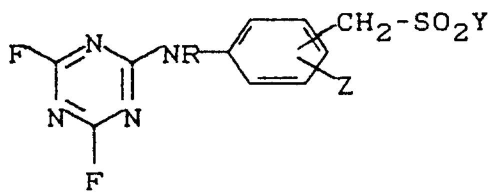

mit Farbbasen umsetzt.

7. Verfahren zum Färben und Bedrucken von Hydroxy- und/oder amidhaltigen Materialien, bei welchen man einen Farbstoff auf das Material aufbringt oder in das Material eindringt und ihn gegebenenfalls in der Wärme und/oder in Gegenwart eines säurebindenden Mittels fixiert, dadurch gekennzeichnet, daß man als Farbstoff einen Farbstoff gemäß wenigstens einem der vorhergehenden Ansprüche verwendet.

Europäisches Patentamt

## EUROPÄISCHER RECHERCHENBERICHT

Nummer der Anmeldung

EP 93101071.4

**EINSCHLÄGIGE DOKUMENTE**

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| D,X | EP - A - 0 307 817 (BASF) * Anspruch 1; Beispiele 8,9,16,17 * | 1-5 | C 09 B 62/006<br>C 09 B 62/507<br>D 06 P 1/38 |
| A | DE - A - 3 916 661 (BAYER) * Ansprüche * | 1,2 | |
| A | DE - A - 3 829 595 (BAYER) * Ansprüche * | 1,2,7 | |
| A | EP - A - 0 316 778 (HOECHST) * Ansprüche 1,2,10,11,17 * | 1,6,7 | |
| D,A | EP - A - 0 085 025 (CIBA-GEIGY) * Ansprüche 1,14-16 * | 1,6,7 | |
| A | EP - A - 0 273 343 (SUMITOMO CHEMICAL) * Zusammenfassung * | 1 | **RECHERCHIERTE SACHGEBIETE (Int. Cl.⁵)**<br>C 09 B |

Der vorliegende Recherchenbericht wurde für alle Patentansprüche erstellt.

| Recherchenort | Abschlußdatum der Recherche | Prüfer |
|---|---|---|
| WIEN | 05-05-1993 | REIF |

**KATEGORIE DER GENANNTEN DOKUMENTEN**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument